# EUROPÄISCHE PATENTSCHRIFT

(11) **EP 2 830 797 B1**
(45) Veröffentlichungstag und Bekanntmachung des Hinweises auf die Patenterteilung: **23.01.2019**
(21) Anmeldenummer: 13724497.6
(22) Anmeldetag: 25.03.2013
(51) Int. Cl.: B23B 27/04, B23B 27/14

(54) **SCHNEIDEINSATZ**
CUTTING INSERT
INSERT DE COUPE

(30) Priorität: 27.03.2012 AT 1142012 U
(43) Veröffentlichungstag der Anmeldung: 04.02.2015
(73) Patentinhaber: Ceratizit Austria Gesellschaft m.b.H., 6600 Reutte (AT)
(72) Erfinder: STEINER, Michael, A-6600 Reutte (AT); KASSNER, Sebastian, A-6604 Höfen (AT); SCHLEINKOFER, Uwe, A-6600 Reutte (AT)
(74) Vertreter: Ciesla, Dirk
(86) Internationale Anmeldenummer: PCT/AT2013/000049
(87) Internationale Veröffentlichungsnummer: WO 2013/142885

(56) Entgegenhaltungen:
- EP-A1- 2 067 552
- EP-A2- 0 257 004
- EP-A2- 0 489 701
- WO-A1-03/076111
- DE-U1-202006 002 827
- Sandvik Coromant: "Turning Tools 2000", 2000, Sandvik Coromant, XP002707629, Seite A6, Seite A7; Tabellen 8,10,11 Seite A70, Seite A71
- DATABASE WPI Week 201159 Thomson Scientific, London, GB; AN 2011-K70933 XP002707630, -& CN 201 913 261 U (ZHEJIANG JINFEI MACHINERY GROUP CO LTD) 3. August 2011 (2011-08-03)

## Beschreibung

Die vorliegende Erfindung betrifft einen Schneideinsatz zur zerspanenden Bearbeitung von Werkstücken gemäß dem Oberbegriff des Patentanspruchs 1 mit einer Schneidkante und einer daran angrenzenden Spanfläche, die durch eine ultraharte Schicht aus Diamant oder kubischem Bornitrid gebildet sind.
Insbesondere zur zerspanenden Bearbeitung von Werkstücken aus Nichteisenmetallen oder Kunststoffen ist es bekannt, Schneideinsätze einzusetzen, die mit einer ultraharten Schicht aus Diamant oder kubischem Bornitrid versehen sind und bei denen die Schneidkante und die an die Schneidkante angrenzende Spanfläche durch die ultraharte Schicht ausgebildet sind. Die ultraharte Schicht kann dabei insbesondere durch monokristallinen Diamant oder polykristallinen Diamant (PKD) oder durch polykristallines Bornitrid gebildet sein. Dabei kann die ultraharte Schicht z.B. mittels CVD (chemical vapour deposition; chemischer Gasphasenabscheidung) abgeschieden oder in anderen Weise auf einem Trägerkörper angebracht sein. EP 1 023 961 B2 beschreibt ein Schneidwerkzeug für die spanabhebende Bearbeitung von Werkstücken dessen Schneidkante und angrenzende Spanfläche aus einer Schicht aus polykristallinem Diamant oder polykristallinem Bornitrid bestehen. Die Spanfläche weist in einem Abstand von 0,2 bis 0,4 mm von der Schneidkante eine allseitig umgrenzte, durch Materialabtrag erzeugte Einsenkung mit einer Tiefe von 0,2 bis 0,5 mm auf.

EP 2 067 552 A1 beschreibt ein Schneidwerkzeug für die spanabhebende Bearbeitung von Werkstücken gemäß dem Oberbegriff des Patentanspruchs 1, bei dem eine Schneidkante und die daran angrenzende Spanfläche aus einer fest mit einer Tragschicht aus Hartmetall verbundenen ultraharten Schicht aus mono- oder polykristallinem Diamant oder polykristallinem Bornitrid besteht. Die Spanfläche bildet hinter der Schneidkante einen schrägen oder konkav gerundeten Abhang einer Einsenkung in der ultraharten Schicht, erreicht eine Tiefe von 0,1 bis 0,5 mm unter dem Niveau der Schneidkante und steigt anschließend vom Boden der Einsenkung wieder an. Daran schließt sich eine schräg oder konkav gerundete Spanleitfläche an einem Führungskörper an, der in einer Aussparung der ultraharten Schicht auf der Tragschicht befestigt ist und sich über die ultraharte Schicht erhebt.

WO 03/076111 A1 beschreibt ein Werkzeug für die spanabhebende Bearbeitung mit einem Kopf und einer an dem Kopf aufgenommenen Schneidspitze, wobei die Schneidspitze eine zwischen einer Oberfläche und einer Seite ausgebildete Schneidkante aufweist. Ein Spanbrecherelement steht von der Oberfläche der Schneidspitze hervor und erstreckt sich durch die Schneidspitze.

Bei derartigen Schneideinsätzen mit einer ultraharten Schicht besteht generell das Problem, dass einerseits eine möglichst gute Spanformung und -ableitung bereitgestellt werden soll, um eine Beschädigung der Werkstückoberfläche und des Schneideinsatzes durch unkontrollierte Spanbildung zu verhindern, andererseits aber die ultraharte Schicht sehr spröde ist, sodass eine Schwächung der ultraharten Schicht möglichst vermieden werden muss, um nicht das Auftreten von Brüchen bei der zerspanenden Bearbeitung zu riskieren. Insbesondere wenn unterschiedliche Schnitttiefen ermöglicht werden sollen, z.B. um sowohl eine Schrupp- als auch eine Schlichtbearbeitung zu ermöglichen, wirft dieser Zielkonflikt Probleme bei der konstruktiven Ausgestaltung der Schneideinsätze auf.

Es ist Aufgabe der vorliegenden Erfindung, einen verbesserten Schneideinsatz zur zerspanenden Bearbeitung von Werkstücken bereitzustellen, der eine höchstmögliche Stabilität der ultraharten Schicht erzielt und dabei eine gute Spankontrolle bei unterschiedlichen Schnitttiefen bereitstellt.

Die Aufgabe wird durch einen Schneideinsatz zur zerspanenden Bearbeitung von Werkstücken nach Anspruch 1 gelöst. Vorteilhafte Weiterbildungen sind in den abhängigen Ansprüchen angegeben.

Durch das Vorsehen von sowohl der als Vertiefung ausgebildeten Spanleitstufe als auch dem zusätzlichen spanbeeinflussenden Element aus einem harten Material wird sowohl bei geringen Schnitttiefen als auch bei großen Schnitttiefen eine gewünschte Spanbeeinflussung erreicht. Da das spanbeeinflussende Element in der radialen Richtung von der als Vertiefung in der ultraharten Schicht ausgebildeten Spanleitstufe beabstandet ist, wird trotz der Materialschwächung der ultraharten Schicht durch die Vertiefung ein hohes Maß an Stabilität der ultraharten Schicht erhalten. Mit dieser Ausgestaltung kann die Spanleitstufe insbesondere besonders flach und nah an der Schneidkante ausgebildet werden und dabei die gewünschte Spanbeeinflussung bei verschiedenen Zerspanungsparametern bereitstellen. Eine flache Ausbildung der Spanleitstufe ermöglicht dabei eine besonders hohe Stabilität des Schneideinsatzes bei unterschiedlichen Zerspanungsparametern. Zwischen der als Vertiefung ausgebildeten Spanleitstufe und dem spanbeeinflussenden Element erstreckt sich die ultraharte Schicht eben, um eine besonders hohe Stabilisierung zu erreichen. Ferner ermöglicht eine flache Ausgestaltung eine Variation der Breite einer an der Schneidkante angeordneten Fase oder Abrundung über einen relativ weiten Bereich. Das spanbeeinflussende Element steht bevorzugt um zumindest 0,5 mm über die Oberfläche der ultraharten Schicht hervor, um die gewünschte Spanbeeinflussung zu erreichen. Das spanbeeinflussende Element ist aus einem harten Material gebildet, kann insbesondere aus Hartmetall, Cermet oder Stahl gefertigt sein, und kann insbesondere separat von einem Trägerkörper oder Grundkörper bei dem Schneideinsatz ausgebildet sein. Das spanbeeinflussende Element kann z.B. auch aus einem ultraharten Material, insbesondere Diamant oder kubischem Bornitrid, gebildet sein. Die der Schneidkante zugewandte Seite des spanbeeinflussenden Elements kann bevorzugt abgeschrägt oder abgerundet ausgebildet sein, sodass sie eine gegenüber der Oberfläche der ultraharten Schicht schräg ansteigende Flanke bildet. Der Schneideinsatz ist bevorzugt zur zerspanenden Bearbeitung von Nichteisenmetallen oder Kunststoffen ausgebildet, insbesondere zur Bearbeitung von Aluminium oder Aluminiumlegierungen. Er kann z.B. aber auch zur Bearbeitung von Gusseisensorten, rostfreien Stählen, etc. ausgebildet sein.

Gemäß einer Weiterbildung umgreift die ultraharte Schicht das spanbeeinflussende Element über einen Umfangsbereich von mehr als 180°. In diesem Fall wird eine besonders hohe Stabilität der ultraharten Schicht auch bei stark belastenden Zerspanungsparametern erzielt. Dabei schmiegt sich die ultraharte Schicht bevorzugt über einen Umfangsbereich von mehr als 180° an das spanbeeinflussende Element an, sodass eine besonders stabile und passgenaue formschlüssige Verbindung von dem spanbeeinflussenden Element und der ultraharten Schicht erreicht wird. Ferner ermöglicht diese Ausgestaltung auch eine Durchführung von ziehenden Schnitten, bei denen die Spanbildung ausgehend von einem bezüglich der Schneidspitze rückwärtig des spanbeeinflussenden Elements befindlichen Bereich der Schneidkante erfolgt. Auch bei solchen ziehenden Schnitten ist dabei ein hohes Maß an Stabilität des Schneideinsatzes gegeben und es wird eine gute Spankontrolle erreicht. Eine Schwächung der ultraharten Schicht durch das Vorsehen einer Aussparung für das spanbeeinflussende Element wird dabei minimiert.

Bevorzugt schmiegt sich die ultraharte Schicht über einen Umfangsbereich von mehr als 180° an das spanbeeinflussende Element an, sodass eine stabile formschlüssige Aufnahme des spanbeeinflussenden Elements erreicht ist. Das spanbeeinflussende Element steht bevorzugt um zumindest 0,5 mm über die Oberfläche der ultraharten Schicht hervor, um die gewünschte Spanbeeinflussung zu erreichen. Das spanbeeinflussende Element ist aus einem harten Material gebildet, kann insbesondere aus Hartmetall, Cermet oder Stahl gefertigt sein, und ist bei dem Schneideinsatz insbesondere separat von einem Trägerkörper oder Grundkörper ausgebildet. Die der Schneidkante zugewandte Seite des spanbeeinflussenden Elements kann bevorzugt abgeschrägt oder abgerundet ausgebildet sein, sodass sie eine gegenüber der Oberfläche der ultraharten Schicht schräg ansteigende Flanke bildet. Der Schneideinsatz ist bevorzugt zur zerspanenden Bearbeitung von Nichteisenmetallen oder Kunststoffen ausgebildet, insbesondere zur Bearbeitung von Aluminium oder Aluminiumlegierungen. Er kann z.B. aber auch zur Bearbeitung von Gusseisensorten, rostfreien Stählen, etc. ausgebildet sein.

Gemäß einer Weiterbildung umgreift die ultraharte Schicht das spanbeeinflussende Element über einen Umfangsbereich von mehr als 300°. In diesem Fall kann eine unerwünschte Schwächung der ultraharten Schicht durch eine Aussparung für das spanbeeinflussende Element effizient vermieden werden und ziehende Schnitte sind über einen großen Winkelbereich ermöglicht. Dabei kann sich die ultraharte Schicht bevorzugt auch über einen Umfangsbereich von mehr als 300° an das spanbeeinflussende Element anschmiegen, sodass eine großflächige formschlüssige Fixierung des spanbeeinflussenden Elements erreicht wird.

Gemäß einer Weiterbildung umgibt die als Vertiefung ausgebildete Spanleitstufe das spanbeeinflussende Element über einen Umfangsbereich von mehr als 180°. Besonders bevorzugt kann die Spanleitstufe das spanbeeinflussende Element über mehr als 195° umgreifen. Bei einer solchen Ausgestaltung der Spanleitstufe wird auch bei ziehenden Schnitten eine gute Spankontrolle bereitgestellt.

Gemäß einer Weiterbildung ist die Schneidkante über ihren gesamten als Schneide einsetzbaren Verlauf mit einer Fase versehen und/oder über ihren gesamten als Schneide einsetzbaren Verlauf in einer Richtung von einer Freifläche zu der Spanfläche abgerundet ausgebildet. In diesem Fall ist die ultraharte Schicht bei allen Schnittparametern zusätzlich stabilisiert.

Gemäß einer Weiterbildung umgreift die ultraharte Schicht das spanbeeinflussende Element um weniger als 360°. In diesem Fall ist eine kostengünstige Herstellung des Schneideinsatzes ermöglicht, bei der eine Ausnehmung für das spanbeeinflussende Element auch bei einer relativ dicken ultraharten Schicht schnell und einfach aus der ultraharten Schichten herausgearbeitet werden kann, z.B. durch Funkenerosion.

Gemäß einer vorteilhaften Weiterbildung umgreift die ultraharte Schicht das spanbeeinflussende Element formschlüssig. In diesem Fall ist eine besonders stabile Anordnung des spanbeeinflussenden Elements gegeben und eine über das absolut erforderliche Maß hinausgehende Schwächung der ultraharten Schicht kann verhindert werden.

Gemäß einer Weiterbildung weist die als Vertiefung in der ultraharten Schicht ausgebildete Spanleitstufe eine Tiefe kleiner als 0,2 mm auf. Bevorzugt kann die Spanleitstufe eine Tiefe kleiner als 0,15 mm aufweisen. Mit einer derartigen geringen Tiefe, wird eine Schwächung der ultraharten Schicht durch die Spanleitstufe zuverlässig vermieden und es ist trotzdem durch die Kombination von der Spanleitstufe und dem spanbeeinflussenden Element eine vorteilhafte Spanbeeinflussung bei unterschiedlichen Schnitttiefen ermöglicht.

Gemäß einer Weiterbildung erstreckt sich die Spanleitstufe bis zu einem Abstand von weniger als 0,2 mm an die Schneidkante. Die Spanleitstufe kann sich bevorzugt bis zu einem Abstand von weniger als 0,15 mm an die Schneidkante erstrecken. Durch diese Anordnung sehr nah an der Schneidkante kann auch bei einer sehr geringen Tiefe der Spanleitstufe die gewünschte Spanbeeinflussung erfolgen. Für den Fall, dass die Schneidkante mit einer Fase oder einer Abrundung in der Richtung von der Freifläche zu der Spanfläche versehen ist, wird die Position der Schneidkante dabei durch den jeweils am weitesten zu dem zu bearbeitenden Material hervorstehenden Bereich bestimmt.

Bei einer vorteilhaften Ausgestaltung ist die ultraharte Schicht auf einem Trägerkörper aufgebracht, der fest mit einem Grundkörper des Schneideinsatzes verbunden ist. Dies ermöglicht eine kostengünstige Herstellung des Schneideinsatzes. Bevorzugt kann das spanbeeinflussende Element materialschlüssig mit dem Trägerkörper und/oder dem Grundkörper verbunden sein. In diesem Fall ist eine besonders stabile Ausgestaltung des Schneideinsatzes erzielt.

Falls das spanbeeinflussende Element aus Hartmetall oder Cermet gefertigt ist, weist es eine besonders gute Haltbarkeit auf und ist bei der Herstellung zuverlässig materialschlüssig mit einem separat ausgebildeten Trägerkörper und/oder Grundkörper des Schneideinsatzes verbindbar. Alternativ kann das spanbeeinflussende Element auch aus einem ultraharten Material, insbesondere poly- oder monokristallinem Diamant oder kubischem Bornitrid, gebildet sein. In diesem Fall weist das spanbeeinflussende Element eine besonders hohe Verschleißbeständigkeit auf.

Gemäß einer Ausgestaltung weist die Schneidkante in Aufsicht einen über mehr als 180° kreisförmigen Verlauf auf. In diesem Fall kann der Schneideinsatz vorteilhaft als eine sogenannte "Knochenplatte" ausgebildet werden, die auch eine Ausführung von ziehenden Schnitten ermöglicht. Bei einer solchen Ausgestaltung wird unter "Schneidecke" der von einem Zentrum des Schneideinsatzes am weitesten hervorstehende Bereich der Schneidkante verstanden.

Gemäß einer anderen Ausgestaltung weist die Schneidkante in Aufsicht einen V-förmigen Verlauf mit einer abgerundeten Schneidecke auf.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine perspektivische Darstellung eines Schneideinsatzes gemäß einer ersten Ausführungsform;
- Fig. 2:: eine Darstellung in Aufsicht des Schneideinsatzes von Fig. 1;
- Fig. 3:: eine Darstellung in Seitenansicht des Schneideinsatzes von Fig. 1;
- Fig. 4:: eine Schnittdarstellung entlang einer Linie IV-IV in Fig. 2;
- Fig. 5:: einen vergrößerten Detailausschnitt von Fig. 4 im Bereich der Schneidkante;
- Fig. 6:: einen Schnitt entlang einer Linie VI-VI in Fig. 2;
- Fig. 7:: eine perspektivische Darstellung eines Schneideinsatzes gemäß einer zweiten Ausführungsform;
- Fig. 8:: eine Darstellung in Aufsicht des Schneideinsatzes von Fig. 7;
- Fig. 9:: eine Darstellung in Seitenansicht des Schneideinsatzes von Fig. 7;
- Fig. 10:: eine Schnittdarstellung entlang einer Linie X-X in Fig. 8;
- Fig. 11:: einen vergrößerten Detailausschnitt von Fig. 8 im Bereich der Schneidkante; und
- Fig. 12:: eine Schnittdarstellung entlang einer Linie XII-XII in Fig. 8.

### ERSTE AUSFÜHRUNGSFORM

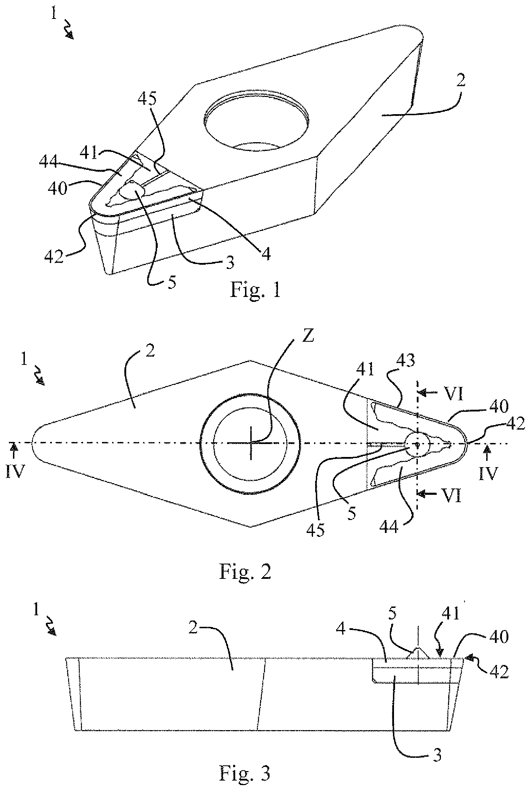

Eine erste Ausführungsform eines Schneideinsatzes 1 wird im Folgenden unter Bezug auf die Fig. 1 bis Fig. 6 beschrieben.

Bei der ersten Ausführungsform weist der Schneideinsatz 1 eine in Aufsicht im Wesentlichen rautenförmige Grundform auf, bei der mindestens eine der beiden spitzwinkligen Ecken als eine in Umfangsrichtung abgerundete Schneidecke ausgebildet ist, wie im Folgenden noch eingehender beschrieben wird. Der Schneideinsatz 1 ist zur zerspanenden Bearbeitung von Werkstücken aus Nichteisenmetallen, insbesondere zur Bearbeitung von Aluminium oder Aluminiumlegierungen, ausgebildet. Er kann z.B. aber auch zur Bearbeitung von Gusseisensorten, rostfreien Stählen, etc. ausgebildet sein.

Der Schneideinsatz 1 weist einen Grundkörper 2 auf, der z.B. aus Hartmetall oder Cermet gebildet sein kann. Der Grundkörper 2 weist in dem Bereich der als Schneidecke ausgebildeten Ecke eine Ausnehmung auf, in der ein Trägerkörper 3 angeordnet ist, der an seiner Oberfläche mit einer ultraharten Schicht 4 versehen ist. Die Ausnehmung in dem Grundkörper 2, der Trägerkörper 3 und die ultraharte Schicht 4 sind dabei derart bemessen, dass die Oberfläche der ultraharten Schicht 4 zumindest annähernd bündig an eine Oberfläche des Grundkörpers 2 anschließt, wie insbesondere in Fig. 3 zu erkennen ist.

Der Trägerkörper 3 ist bevorzugt aus Hartmetall oder einem Cermet gebildet und ist materialschlüssig fest mit dem Grundkörper 2 verbunden, z.B. durch Löten. Die ultraharte Schicht 4 ist fest auf dem Trägerkörper 3 angeordnet und kann insbesondere durch monokristallinen oder polykristallinen Diamant oder durch polykristallines kubisches Bornitrid gebildet sein. Die ultr7aharte Schicht 4 kann dabei z.B. separat ausgebildet und anschließend mit dem Trägerkörper 3 verbunden worden oder z.B. auch unmittelbar auf dem Trägerkörper 3 abgeschieden sein.

Die ultraharte Schicht 4 ist derart angeordnet, dass sie eine Schneidkante 40 und eine daran anschließende Spanfläche 41 des Schneideinsatzes 1 ausbildet. Die Schneidkante 40 verläuft in einer Aufsicht im wesentlichen V-förmig mit einer abgerundeten Ecke, die eine Schneidecke 42 ausbildet. Bei der dargestellten Ausführungsform schließt die V-förmige Schneidkante 40 z.B. einen Innenwinkel von 35° ein, es sind jedoch auch andere Innenwinkel möglich.

Die Schneidkante 40 ist über ihren gesamten als Schneide einsetzbaren Verlauf mit einer Fase 43 versehen, die zur Stabilisierung der Schneidkante 40 dient. Anstelle der Fase 43 oder zusätzlich kann die Schneidkante 40 auch in der Richtung von der Freifläche zu der Spanfläche 41 eine abgerundete Form aufweisen. Es ist z.B. aber auch möglich, die Schneidkante 40 mit einer scharfen Kante, d.h. ohne Fase oder Abrundung, auszubilden.

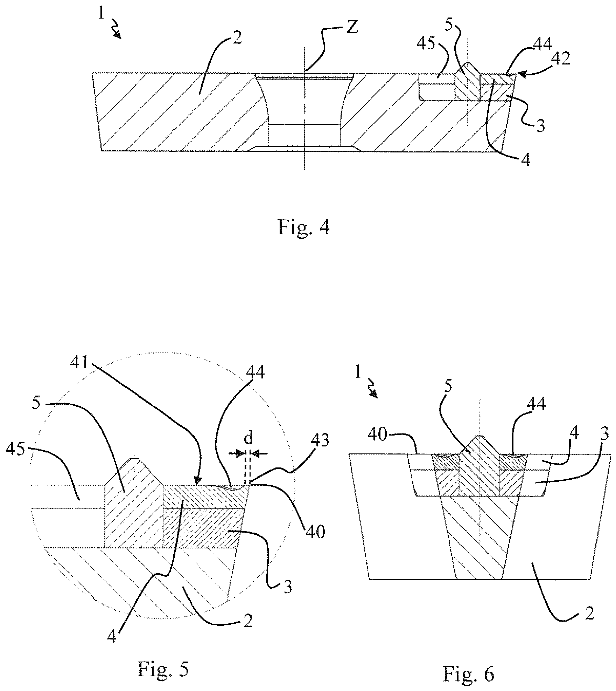

In einem Abstand d von der Schneidkante 40 ist eine Spanleitstufe 44 als Vertiefung in die Spanfläche 41 eingebracht, wie insbesondere in Fig. 5 zu sehen ist. Die Spanleitstufe 44 ist sehr nah an der Schneidkante 40 angeordnet und kann insbesondere in einem Abstand d, der weniger als 0,2 mm beträgt, bevorzugt weniger als 0,15 mm, von der Schneidkante 40 angeordnet sein. Bei der dargestellten Ausführungsform beträgt der Abstand d z.B. ca. 0,1 mm. Die Spanleitstufe 44 ist ferner mit einer sehr geringen Tiefe (in einer Richtung senkrecht zu der Oberseite der ultraharten Schicht 4) ausgebildet, die insbesondere kleiner als 0,2 mm, bevorzugt kleiner als 0,15 mm sein kann. Die als Vertiefung ausgebildete Spanleitstufe 44 kann z.B. mittels eines Lasers oder mittels eines Erodierverfahrens in die Oberfläche der ultraharten Schicht 4 eingebracht sein. Wie insbesondere in der Darstellung von Fig. 2 zu sehen ist, erstreckt sich die Spanleitstufe 44 im Wesentlichen entlang dem gesamten Verlauf der Schneidkante 40.

Der Schneideinsatz 1 weist ferner ein spanbeeinflussendes Element 5 auf, das separat von dem Grundkörper 2, dem Trägerkörper 3 und der ultraharten Schicht 4 ausgebildet ist. Das spanbeeinflussende Element 5 kann insbesondere aus Hartmetall, Cermet oder Stahl gebildet sein, bevorzugt aus Hartmetall, aber auch aus Diamant oder kubischem Bornitrid. Bei der dargestellten Ausführungsform ist das spanbeeinflussende Element 5 als ein Stift ausgebildet, der materialschlüssig fest mit dem Trägerkörper 3, mit dem Grundkörper 2 oder mit beiden verbunden ist. Das spanbeeinflussende Element 5 ist bevorzugt derart angeordnet, dass es um zumindest 0,5 mm über die Oberfläche der ultraharten Schicht hervorsteht. Bei der dargestellten Ausführungsform steht es z.B. um ca. 0,7 mm über die Oberfläche der ultraharten Schicht hervor. Auf den der Schneidkante 40 zugewandten Seiten ist das spanbeeinflussende Element 5 mit einer abgeschrägten Oberfläche versehen, wie insbesondere in den Fig. 3 bis Fig. 6 zu erkennen ist.

Das spanbeeinflussende Element 5 ist in einer Ausnehmung in der ultraharten Schicht 4 angeordnet und durchdringt die gesamte ultraharte Schicht 4, wie in den Fig. 4 bis Fig. 6 zu sehen ist. Bei der dargestellten Ausführungsform ist die Ausnehmung mittels eines Erodierverfahrens in der ultraharten Schicht 4 ausgebildet, indem ein Teil der ultraharten Schicht 4 entfernt wurde, um die Ausnehmung zu bilden. Das spanbeeinflussende Element 5 ist derart in der Ausnehmung der ultraharten Schicht 4 angeordnet, dass die ultraharte Schicht 4 den Außenumfang des spanbeeinflussenden Elements 5 über einen großen Umfangsbereich der größer als 180° ist, insbesondere größer als 300° ist, formschlüssig umgibt. Bei der Ausführungsform umgreift die ultraharte Schicht 4 das spanbeeinflussende Element 5 über einen Umfangsbereich von etwas weniger als 360°, sodass auf der von der Schneidecke 42 abgewandten Seite des spanbeeinflussenden Elements 5 ein schmaler Spalt 45 in der ultraharten Schicht 4 gebildet ist. Dieser Spalt 45 resultiert von der Erzeugung der Ausnehmung für das spanbeeinflussende Element 5 in einem Erodierverfahren und ein entsprechender Spalt erstreckt sich bei der Ausführungsform auch durch den Trägerkörper 3. Die Ausnehmung ist derart bemessen, dass sich die ultraharte Schicht 4 über etwas weniger als 360° von außen an den Außenumfang des spanbeeinflussenden Elements 5 anschmiegt. Wie insbesondere in den Fig. 2 und Fig. 4 zu sehen ist, schließt das spanbeeinflussende Element 5 in einer Richtung von der Schneidecke 42 zu einem Zentrum Z des Schneideinsatzes 1 nicht unmittelbar an die als Vertiefung in der ultraharten Schicht 4 ausgebildete Spanleitstufe 44 an, sondern ist räumlich beabstandet von der Spanleitstufe 44 ausgebildet. Bei der Ausführungsform erstreckt sich die ultraharte Schicht 4 in der Richtung von der Schneidecke 42 zu dem Zentrum Z zwischen der Spanleitstufe 44 und dem spanbeeinflussenden Element 5 eben. Wie insbesondere in der Darstellung von Fig. 2 zu sehen ist, verläuft die Spanleitstufe 44 über einen weiten Bereich, der sich - von der Schneidecke 42 aus betrachtet - bis weit hinter das spanbeeinflussende Element 5 erstreckt.

### ZWEITE AUSFÜHRUNGSFORM

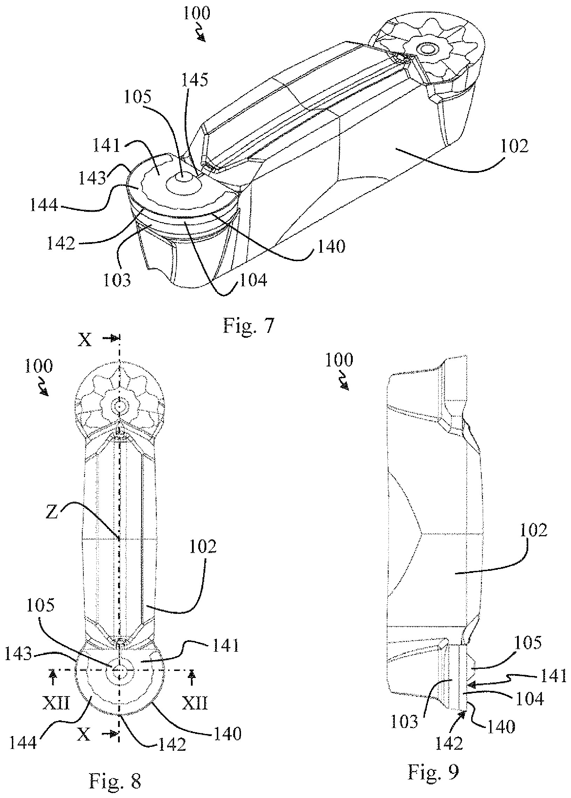

Eine zweite Ausführungsform eines Schneideinsatzes wird im Folgenden unter Bezug auf die Fig. 7 bis Fig. 12 beschrieben.

Der Schneideinsatz 100 gemäß der zweiten Ausführungsform unterscheidet sich von der ersten Ausführungsform im Wesentlichen in der Grundform des Schneideinsatzes. Anstelle der im Wesentlichen rautenförmigen Ausgestaltung bei dem Schneideinsatz 1 gemäß der ersten Ausführungsform weist der Schneideinsatz 100 gemäß der zweiten Ausführungsform eine in Aufsicht im Wesentlichen knochenförmige Grundform auf, wie insbesondere in Fig. 8 zu sehen ist. Auch der Schneideinsatz 100 gemäß der zweiten Ausführungsform ist zur zerspanenden Bearbeitung von Werkstücken aus Nichteisenmetallen, insbesondere zur Bearbeitung von Aluminium oder Aluminiumlegierungen, ausgebildet. Er kann z.B. aber auch zur Bearbeitung von Gusseisensorten, rostfreien Stählen, etc. ausgebildet sein.

Der Schneideinsatz 100 der zweiten Ausführungsform weist eine Schneidkante 140 mit einem in Aufsicht über mehr als 180° zumindest im Wesentlichen kreisförmigen Verlauf auf, wie insbesondere in Fig. 8 zu sehen ist. Ein am weitesten von einem Zentrum Z des Schneideinsatzes 100 entfernter Bereich der Schneidkante 140 bildet bei dem Schneideinsatz 100 gemäß der zweiten Ausführungsform eine Schneidecke 142.

Der Schneideinsatz 100 weist einen Grundkörper 102 auf, der z.B. aus Hartmetall oder Cermet gebildet sein kann. Der Grundkörper 102 weist eine Ausnehmung auf, in der ein Trägerkörper 103 angeordnet ist, der an seiner Oberfläche mit einer ultraharten Schicht 104 versehen ist.

Der Trägerkörper 103 ist bevorzugt aus Hartmetall oder einem Cermet gebildet und ist materialschlüssig fest mit dem Grundkörper 102 verbunden, z.B. durch Löten. Die ultraharte Schicht 104 ist fest auf dem Trägerkörper 103 angeordnet und kann insbesondere durch monokristallinen oder polykristallinen Diamant oder durch polykristallines kubisches Bornitrid gebildet sein. Die ultraharte Schicht 104 kann dabei z.B. separat ausgebildet und anschließend mit dem Trägerkörper 103 verbunden worden oder z.B. auch unmittelbar auf dem Trägerkörper 103 abgeschieden sein.

Die ultraharte Schicht 104 ist derart angeordnet, dass sie eine Schneidkante 140 und eine daran anschließende Spanfläche 141 des Schneideinsatzes 100 ausbildet. Die Schneidkante 140 verläuft in einer Aufsicht, wie in Fig. 8 zu sehen ist, im Wesentlichen kreissegmentförmig über einen Kreisbogen von mehr als 180°, insbesondere über mehr als 195°.

Die Schneidkante 140 ist über ihren gesamten als Schneide einsetzbaren Verlauf mit einer Fase 143 versehen, die zur Stabilisierung der Schneidkante 140 dient. Anstelle der Fase 143 oder zusätzlich kann die Schneidkante 140 auch in der Richtung von der Freifläche zu der Spanfläche 141 eine abgerundete Form aufweisen. Es ist z.B. aber auch möglich, die Schneidkante 140 als scharfe Kante, d.h. ohne Fase oder Abrundung, auszubilden.

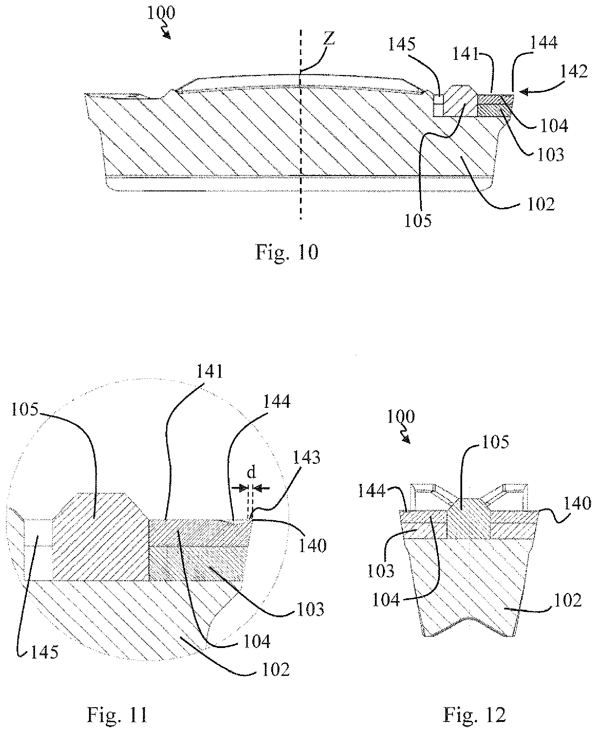

In einem Abstand d von der Schneidkante 140 ist eine Spanleitstufe 144 als Vertiefung in die Spanfläche 141 eingebracht, wie insbesondere in Fig. 11 zu sehen ist. Die Spanleitstufe 144 ist sehr nah an der Schneidkante 140 angeordnet und kann insbesondere in einem Abstand d, der weniger als 0,2 mm beträgt, bevorzugt weniger als 0,15 mm, von der Schneidkante 140 angeordnet sein. Bei der dargestellten Ausführungsform beträgt der Abstand d z.B. ca. 0,1 mm. Die Spanleitstufe 144 ist ferner mit einer sehr geringen Tiefe (in einer Richtung senkrecht zu der Oberseite der ultraharten Schicht 104) ausgebildet, die insbesondere kleiner als 0,2 mm, bevorzugt kleiner als 0,15 mm sein kann. Wie bei der ersten Ausführungsform kann die als Vertiefung ausgebildete Spanleitstufe 144 z.B. mittels eines Lasers oder mittels eines Erodierverfahrens in die Oberfläche der ultraharten Schicht 104 eingebracht sein. Wie insbesondere in der Darstellung von Fig. 8 zu sehen ist, erstreckt sich die Spanleitstufe 144 im Wesentlichen entlang dem gesamten Verlauf der Schneidkante 140.

Der Schneideinsatz 100 gemäß der zweiten Ausführungsform weist ferner ein spanbeeinflussendes Element 105 auf, das separat von dem Grundkörper 102, dem Trägerkörper 103 und der ultraharten Schicht 104 ausgebildet ist. Das spanbeeinflussende Element 105 kann insbesondere aus Hartmetall, Cermet oder Stahl gebildet sein, bevorzugt aus Hartmetall, aber auch aus Diamant oder kubischem Bornitrid. Bei der dargestellten Ausführungsform ist das spanbeeinflussende Element 105 als ein Stift ausgebildet, der materialschlüssig fest mit dem Trägerkörper 103, mit dem Grundkörper 102 oder mit beiden verbunden ist. Das spanbeeinflussende Element 105 ist bevorzugt derart angeordnet, dass es um zumindest 0,5 mm über die Oberfläche der ultraharten Schicht 104 hervorsteht. Bei der dargestellten Ausführungsform steht es z.B. um ca. 0,7 mm über die Oberfläche der ultraharten Schicht 104 hervor. Auf den der Schneidkante 140 zugewandten Seiten ist das spanbeeinflussende Element 105 mit einer abgeschrägten Oberfläche versehen, wie in den Fig. 9 bis Fig. 12 zu erkennen ist.

Das spanbeeinflussende Element 105 ist in einer Ausnehmung in der ultraharten Schicht 104 angeordnet und durchdringt die gesamte ultraharte Schicht 104, wie in den Fig. 10 bis Fig. 12 zu sehen ist. Das spanbeeinflussende Element 105 ist dabei derart angeordnet, dass es auch den Trägerkörper 103 vollständig durchdringt. Bei der dargestellten Ausführungsform ist die Ausnehmung mittels eines Erodierverfahrens in der ultraharten Schicht 104 ausgebildet, indem ein Teil der ultraharten Schicht 104 entfernt wurde, um die Ausnehmung zu bilden. Das spanbeeinflussende Element 105 ist derart in der Ausnehmung der ultraharten Schicht 104 angeordnet, dass die ultraharte Schicht 104 den Außenumfang des spanbeeinflussenden Elements 105 über einen großen Umfangsbereich der größer als 180° ist, insbesondere größer als 300° ist, formschlüssig umgibt. Bei der Ausführungsform umgreift die ultraharte Schicht 104 das spanbeeinflussende Element 105 über einen Umfangsbereich von etwas weniger als 360°, sodass auf der von der Schneidecke 142 abgewandten Seite des spanbeeinflussenden Elements 105 ein schmaler Spalt 145 in der ultraharten Schicht 104 gebildet ist. Dieser Spalt 145 resultiert von der Erzeugung der Ausnehmung für das span beeinflussende Element 105 in einem Erodierverfahren und ein entsprechender Spalt erstreckt sich bei der zweiten Ausführungsform auch durch den Trägerkörper 103. Die Ausnehmung ist derart bemessen, dass sich die ultraharte Schicht 104 über etwas weniger als 360° von außen an den Außenumfang des spanbeeinflussenden Elements 105 anschmiegt.
Wie in den Fig. 8 und Fig. 10 bis Fig. 12 zu sehen ist, schließt das spanbeeinflussende Element 105 über den gesamten Verlauf der Spanleitstufe 144 nicht unmittelbar an die Spanleitstufe 144 an. Insbesondere schließt das spanbeeinflussende Element 105 auch in einer Richtung von der Schneidecke 142 zu einem Zentrum Z des Schneideinsatzes 100 nicht unmittelbar an die als Vertiefung in der ultraharten Schicht 104 ausgebildete Spanleitstufe 144 an, sondern ist räumlich beabstandet von der Spanleitstufe 144 ausgebildet. Das spanbeeinflussende Element 105 hat dabei über den gesamten Verlauf der Spanleitstufe 144 - abgesehen von einem leicht gewellten Verlauf des inneren Randes der Spanleitstufe 144 - im Wesentlichen einen gleichbleibenden Abstand zu der Spanleitstufe 144 und zu der Schneidkante 140. Bei der zweiten Ausführungsform erstreckt sich die ultraharte Schicht 104 zwischen der Spanleitstufe 144 und dem spanbeeinflussenden Element 105 eben. Wie insbesondere in den Darstellungen von Fig. 7 und Fig. 8 zu sehen ist, verläuft die Spanleitstufe 144 über einen weiten Bereich, der sich, von der Schneidecke 142 aus betrachtet, bis weit hinter das spanbeeinflussende Element 105 erstreckt, sodass sich die Spanleitstufe 144 über einen großen Winkelbereich, der größer als 180° ist, insbesondere mehr als 195° um das spanbeeinflussende Element 105 erstreckt. Dabei umgibt die Spanleitstufe 144 das spanbeeinflussende Element 105 im Wesentlichen ringsegmentförmig. Diese Ausgestaltung ermöglicht mit dem Schneideinsatz 100 gemäß der zweiten Ausführungsform eine zerspanende Bearbeitung mit ziehendem Schnitt, bei der eine Spanbildung ausgehend von dem Bereich des Schneidkante 140 erfolgt, der sich auf der von der Schneidecke 142 abgewandten Seite des spanbeeinflussenden Elements 105 befindet, d.h. ausgehend von dem Bereich des Schneidkante 140, der sich in Fig. 8 oberhalb der Linie XII-XII befindet. Durch den gleichbleibenden Abstand zwischen der Schneidkante 140 und dem spanbeeinflussenden Element 105 in Verbindung mit dem gleichbleibendem Abstand zwischen der Spanleitstufe 144 und dem spanbeeinflussenden Element 105 werden damit auch bei verschiedenen Zerspanungsrichtungen bei verschiedenen Schnitttiefen jeweils eine gute Spankontrolle und eine hohe Stabilität des Schneideinsatzes 100 bereitgestellt. Insbesondere wird auch bei ziehenden Schnitten für unterschiedliche Schnitttiefen eine gute Spankontrolle bereitgestellt.

### ABWANDLUNGEN

Obwohl zwei Ausführungsformen beschrieben wurden, bei denen jeweils ein Aufbau aus einem Grundkörper, einem Trägerkörper und einer ultraharten Schicht gegeben ist, ist es nicht zwingend erforderlich, dass ein Grundkörper und ein Trägerkörper als separate Komponenten vorgesehen sind. Z.B. ist es auch möglich, dass die ultraharte Schicht unmittelbar auf einen Grundkörper aufgebracht ist, ohne dass ein zusätzlicher Trägerkörper vorhanden ist.

Obwohl bei den Ausführungsformen das spanbeeinflussende Element jeweils sowohl die ultraharte Schicht als auch den Trägerkörper vollständig durchdringt, ist auch dies nicht zwingend. Z.B. kann das spanbeeinflussende Element auch nur die ultraharte Schicht durchdringen oder den Trägerkörper nur teilweise durchdringen. Obwohl bei den Ausführungsformen jeweils rückseitig des spanbeeinflussenden Elements ein Spalt in der ultraharten Schicht vorgesehen ist, was insbesondere bei einer relativ dicken ultraharten Schicht herstellungstechnisch vorteilhaft ist, ist es z.B. auch möglich, dass das spanbeeinflussende Element ohne Spalt vollständig von der ultraharten Schicht umgeben wird.

Obwohl zwei spezielle Formen von Schneideinsätzen beschrieben wurden, sind auch andere, von der Rautenform bzw. Knochenform abweichende Formen möglich.

## Patentansprüche

1. Schneideinsatz (1; 100) zur zerspanenden Bearbeitung von Werkstücken mit
einer Schneidkante (40; 140) und einer daran angrenzenden Spanfläche (41; 141), die durch eine ultraharte Schicht (4; 104) aus Diamant oder kubischem Bornitrid gebildet sind,
wobei in der Spanfläche (41; 141) eine als Vertiefung in der ultraharten Schicht (4; 104) ausgebildete Spanleitstufe (44; 144) vorgesehen ist und auf der von der Schneidkante (40; 140) abgewandten Seite der Spanleitstufe (44; 144) ein spanbeeinflussendes Element (5; 105) aus einem harten Material angeordnet ist, das über die Oberfläche der ultraharten Schicht (4; 104) hervorsteht,
wobei in einer von einer Schneidecke (42; 142) zu einem Zentrum (Z) des Schneideinsatzes verlaufenden, radialen Richtung das spanbeeinflussende Element (5; 105) von der Spanleitstufe (44; 144) beabstandet angeordnet ist,
**dadurch gekennzeichnet, dass** sich die ultraharte Schicht (4; 104) zwischen der als Vertiefung ausgebildeten Spanleitstufe (44; 144) und dem spanbeeinflussenden Element (5; 105) eben erstreckt.

2. Schneideinsatz nach Anspruch 1, **dadurch gekennzeichnet, dass** die ultraharte Schicht (4; 104) das spanbeeinflussende Element (5; 105) über einen Umfangsbereich von mehr als 180° umgreift.

3. Schneideinsatz nach Anspruch 2, **dadurch gekennzeichnet, dass** die ultraharte Schicht (4; 104) das spanbeeinflussende Element (5; 105) über einen Umfangsbereich von mehr als 300° umgreift.

4. Schneideinsatz nach einem der vorangehenden Ansprüche, **dadurch gekennzeichnet, dass** die als Vertiefung ausgebildete Spanleitstufe (44; 144) das spanbeeinflussende Element (5; 105) über einen Umfangsbereich von mehr als 180°, bevorzugt mehr als 195°, umgibt.

5. Schneideinsatz nach einem der vorangehenden Ansprüche, **dadurch gekennzeichnet, dass** die Schneidkante (40; 140) über ihren gesamten als Schneide einsetzbaren Verlauf mit einer Fase (43; 143) versehen und/oder in einer Richtung von einer Freifläche zu der Spanfläche (41; 141) abgerundet ist.

6. Schneideinsatz nach einem der vorangehenden Ansprüche, **dadurch gekennzeichnet, dass** die ultraharte Schicht (4; 104) das spanbeeinflussende Element (5; 105) um weniger als 360° umgreift.

7. Schneideinsatz nach einem der vorangehenden Ansprüche, **dadurch gekennzeichnet, dass** die ultraharte Schicht (4; 104) das spanbeeinflussende Element (5; 105) formschlüssig umgreift.

8. Schneideinsatz nach einem der vorangehenden Ansprüche, **dadurch gekennzeichnet, dass** die Spanleitstufe (44; 144) eine Tiefe kleiner als 0,2 mm, bevorzugt kleiner als 0,15 mm, aufweist.

9. Schneideinsatz nach einem der vorangehenden Ansprüche, **dadurch gekennzeichnet, dass** sich die Spanleitstufe (44; 144) bis zu einem Abstand (d) von weniger als 0,2 mm, bevorzugt weniger als 0,15 mm, an die Schneidkante (40; 140) erstreckt.

10. Schneideinsatz nach einem der vorangehenden Ansprüche, **dadurch gekennzeichnet, dass** die ultraharte Schicht (4; 104) auf einem Trägerkörper (3; 103) aufgebracht ist, der fest mit einem Grundkörper (2; 102) des Schneideinsatzes (1; 100) verbunden ist.

11. Schneideinsatz nach Anspruch 10, **dadurch gekennzeichnet, dass** das spanbeeinflussende Element (5; 105) materialschlüssig mit dem Trägerkörper (3; 103) und/oder dem Grundkörper (2; 102) verbunden ist.

12. Schneideinsatz nach einem der vorangehenden Ansprüche, **dadurch gekennzeichnet, dass** das spanbeeinflussende Element (5; 105) aus Hartmetall, Cermet, Diamant oder kubischem Bornitrid gefertigt ist.

13. Schneideinsatz nach einem der vorangehenden Ansprüche, **dadurch gekennzeichnet, dass** die Schneidkante (140) in Aufsicht einen über mehr als 180° im Wesentlichen kreisförmigen Verlauf aufweist.

14. Schneideinsatz nach einem der Ansprüche 1 bis 12, **dadurch gekennzeichnet, dass** die Schneidkante (40) in Aufsicht einen V-förmigen Verlauf mit einer abgerundeten Schneidecke (42) aufweist.

## Claims

1. Cutting insert (1; 100) for the machining of workpieces, comprising a cutting edge (40; 140) and an adjoining rake face (41; 141) which are formed by an ultrahard layer (4; 104) of diamond or cubic boron nitride, wherein a chip breaker groove (44; 144) formed as a depression in the ultrahard layer (4; 104) is provided in the rake face (41; 141) and a chip-influencing element (5; 105) composed of a hard material is arranged on the side of the chip breaker groove (44; 144) that faces away from the cutting edge (40; 140), which element projects beyond the surface of the ultrahard layer (4; 104), wherein the chip-influencing element (5; 105) is arranged spaced apart from the chip breaker groove (44; 144) in a radial direction extending from a cutting corner (42; 142) to a centre (Z) of the cutting insert, **characterized in that** the ultrahard layer (4; 104) extends flat between the chip breaker groove (44; 144) formed as a depression and the chip-influencing element (5; 105).

2. Cutting insert according to Claim 1, **characterized in that** the ultrahard layer (4; 104) engages around the chip-influencing element (5; 105) over a circumferential region of more than 180°.

3. Cutting insert according to Claim 2, **characterized in that** the ultrahard layer (4; 104) engages around the chip-influencing element (5; 105) over a circumferential region of more than 300°.

4. Cutting insert according to one of the preceding claims, **characterized in that** the chip breaker groove (44; 144) formed as a depression surrounds the chip-influencing element (5; 105) over a circumferential region of more than 180°, preferably more than 195°.

5. Cutting insert according to one of the preceding claims, **characterized in that** the cutting edge (40; 140) is provided with a bevel (43; 143) over its entire profile which can be used as a cutter and/or is rounded off in a direction from a free face to the rake face (41; 141).

6. Cutting insert according to one of the preceding claims, **characterized in that** the ultrahard layer (4; 104) engages around the chip-influencing element (5; 105) by less than 360°.

7. Cutting insert according to one of the preceding claims, **characterized in that** the ultrahard layer (4; 104) positively engages around the chip-influencing element (5; 105).

8. Cutting insert according to one of the preceding claims, **characterized in that** the chip breaker groove (44; 144) has a depth of less than 0.2 mm, preferably of less than 0.15 mm.

9. Cutting insert according to one of the preceding claims, **characterized in that** the chip breaker groove (44; 144) extends up to a distance (d) of less than 0.2 mm, preferably less than 0.15 mm, to the cutting edge (40; 140).

10. Cutting insert according to one of the preceding claims, **characterized in that** the ultrahard layer (4; 104) is applied to a carrier body (3; 103) which is fixedly connected to a base body (2; 102) of the cutting insert (1; 100).

11. Cutting insert according to Claim 10, **characterized in that** the chip-influencing element (5; 105) is connected to the carrier body (3; 103) and/or the base body (2; 102) in a materially bonded manner.

12. Cutting insert according to one of the preceding claims, **characterized in that** the chip-influencing element (5; 105) is produced from hard metal, cermet, diamond or cubic boron nitride.

13. Cutting insert according to one of the preceding claims, **characterized in that**, as seen in plan view, the cutting edge (140) has a profile which is substantially circular over more than 180°.

14. Cutting insert according to one of Claims 1 to 12, **characterized in that**, as seen in plan view, the cutting edge (40) has a V-shaped profile with a rounded-off cutting corner (42).

## Revendications

1. Insert de coupe (1 ; 100), destiné à l'usinage de pièces, comprenant un bord de coupe (40 ; 140) et une face de coupe (41 ; 141), adjacente à celui-ci, qui sont formés par une couche ultra-dure (4 ; 104) de diamant ou de nitrure de bore cubique,
un étage de guidage de copeaux (44 ; 144) réalisé sous la forme d'un creux dans la couche ultra-dure (4 ; 104) étant prévu dans la face de coupe (41 ; 141) et un élément influençant l'usinage (5 ; 105) en matière dure, saillant de la surface de la couche ultra-dure (4 ; 104), étant disposé du côté du gradin de guidage de copeaux (44 ; 144) qui est opposé au bord de coupe (40 ; 140) l'élément influençant l'usinage (5 ; 105) étant disposé à distance de l'étage de guidage de copeaux (44 ; 144) dans une direction radiale, s'étendant d'un coin de coupe (42 ; 142) vers le centre (Z) de l'insert de coupe, **caractérisé en ce que** la couche ultra-dure (4 ; 104) s'étend dans un plan entre l'étage de guidage de copeaux (44 ; 144) réalisé sous la forme d'un creux et l'élément influençant l'usinage (5 ; 105).

2. Insert de coupe selon la revendication 1, **caractérisé en ce que** la couche ultra-dure (4 ; 104) entoure l'élément influençant l'usinage (5 ; 105) sur une région circonférentielle de plus de 180°.

3. Insert de coupe selon la revendication 2, **caractérisé en ce que** la couche ultra-dure (4 ; 104) entoure l'élément influençant l'usinage (5 ; 105) sur une région circonférentielle de plus de 300°.

4. Insert de coupe selon l'une des revendications précédentes, **caractérisé en ce que** l'étage de guidage de copeaux (44 ; 144) réalisé sous la forme d'un creux entoure l'élément influençant l'usinage (5 ; 105) sur une région circonférentielle de plus de 180°, de préférence de plus de 195°.

5. Insert de coupe selon l'une des revendications précédentes, **caractérisé en ce que** le bord de coupe (40 ; 140) est pourvu d'un biseau (43 ; 143) sur tout son profil qui peut être utilisé comme tranchant et/ou est arrondi dans une direction allant d'une face de dépouille à la face de coupe (41 ; 141).

6. Insert de coupe selon l'une des revendications précédentes, **caractérisé en ce que** la couche ultra-dure (4 ; 104) entoure l'élément influençant l'usinage (5 ; 105) de moins de 360°.

7. Insert de coupe selon l'une des revendications précédentes, **caractérisé en ce que** la couche ultra-dure (4 ; 104) entoure l'élément influençant l'usinage (5 ; 105) par complémentarité de formes.

8. Insert de coupe selon l'une des revendications précédentes, **caractérisé en ce que** l'étage de guidage de copeaux (44 ; 144) a une profondeur inférieure à 0,2 mm, de préférence inférieure à 0,15 mm.

9. Insert de coupe selon l'une des revendications précédentes, **caractérisé en ce que** l'étage de guidage de copeaux (44 ; 144) s'étend jusqu'à une distance (d) inférieure à 0,2 mm, de préférence inférieure à 0,15 mm, du bord de coupe (40 ; 140).

10. Insert de coupe selon l'une des revendications précédentes, **caractérisé en ce que** la couche ultra-dure (4 ; 104) est appliquée sur un corps porteur (3 ; 103) relié de manière fixe à un corps de base (2 ; 102) de l'insert de coupe (1 ; 100).

11. Insert de coupe selon la revendication 10, **caractérisé en ce que** l'élément influençant l'usinage (5 ; 105) est relié matériellement au corps porteur (3 ; 103) et/ou au corps de base (2 ; 102).

12. Insert de coupe selon l'une des revendications précédentes, **caractérisé en ce que** l'élément influençant l'usinage (5 ; 105) est en métal dur, en cermet, en diamant ou en nitrure de bore cubique.

13. Insert de coupe selon l'une des revendications précédentes, **caractérisé en ce que** le bord de coupe (140) présente, en vue de dessus, sur plus de 180°, un profil sensiblement circulaire.

14. Insert de coupe selon l'une des revendications 1 à 12, **caractérisé en ce que** le bord de coupe (40) présente, en vue de dessus, un profil en forme de V pourvu d'un bord de coupe arrondi (42).
